# EUROPEAN PATENT APPLICATION

(11) **EP 4 718 419 A1**
(43) Date of publication of application: **01.04.2026**
(21) Application number: 24216481.2
(22) Date of filing: 29.11.2024
(51) Int. Cl.: G08G 1/00

(54) **HAZARD WARNING APPARATUS AND SYSTEMS FOR AUTOMOTIVE APPLICATIONS**

(30) Priority: 30.09.2024 IN 202441073613
(71) Applicant: NXP B.V., 5656 AG Eindhoven (NL)
(72) Inventor: Naik, Onkar Damodar, 5656AG Eindhoven (NL); Bogadi Eswaraprasad, Jagadish, 5656AG Eindhoven (NL)
(74) Representative: Hardingham, Christopher Mark

(57) **Abstract**

Aspects of this disclosure are directed to hazard warning apparatus, for use in automotive applications and comprising: an ultra-wideband, UWB, device configured to identify a hazard by: receiving a beacon signal from a remote UWB device; performing a ranging session with the remote UWB device; and receiving hazard data from the remote UWB device; and a response unit configured to, in response to the UWB transceiver identifying a hazard, provide a response to a user. Related systems are also disclosed.

## Description

### FIELD OF THE DISCLOSURE

This present disclosure relates to hazard warning apparatuses and systems particularly for use in automotive applications.

### BACKGROUND

Conventionally automotive hazard warnings, such as roadside signs, are visual in nature. The roadside signs are positioned at or close by a hazard and may be permanently located thereat, for example to provide warning of multiple sharp bends in the roadway, or may be temporarily placed at or close by a hazard for example to provide warning of a pothole or a spillage on a roadway. The effectiveness of such hazard warnings is entirely dependent on the users of nearby vehicles becoming aware of the warning.

It is known to provide electronic beacons or other apparatus to provide electronic warning of hazards. However, such electronic beacons have found limited application and are not widely used. Some of the challenges associated with such electronic warning signs are that of those of accurately locating the hazard, providing suitable information in a suitable timeframe, and providing information in a sufficiently standardised format to be useful by a sufficient large group of users, to justify the costs of installation of systems.

### SUMMARY

According to a first aspect of the present disclosure, there is provided a hazard warning apparatus, for use in automotive applications and comprising: an ultra-wideband, UWB, device configured to identify a hazard by: receiving a beacon signal from a remote UWB device; performing a ranging session with the remote UWB device; and receiving hazard data from the remote UWB device; and a response unit configured to, in response to the UWB device identifying a hazard, provide a response to a user.

UWB devices are particularly suited to both transfer of information by data transfer and position related information by ranging protocols. Such a UWB device may be able to identify a hazard and, where appropriate, provide distance information as to the proximity of the hazard, and make this information available to a user through a response unit.

According to one or more embodiments, the response is one of an audible signal, a visual signal, or an audiovisual signal. By providing a signal, either as an audible signal, a visual signal or an audiovisual signal, a user such as a driver of a vehicle within which the apparatus is located may be alerted to the hazard.

According to one or more embodiments, the response unit further comprises an evaluation unit configured to determine whether a reaction is required to the hazard warning, and in response to determining that a reaction is not required, to suppress the response. For example, the evaluation unit may compare a speed of a vehicle on or in which the apparatus is located, with a maximum speed hazard data, and determine that the vehicle does not need to slow down, and thus suppress the response. In one or more other embodiments, the evaluation unit may be comprised in the remote UWB device.

According to one or more embodiments, the user is an advanced driver assistance system, ADAS, and the response is a control signal for the advanced driver assistance system. The hazard warning apparatus may thus be linked to other vehicle systems. In other embodiments, the user may be a driver of the vehicle.

According to one or more embodiments, the response is indicative of a maximum safe speed for a vehicle in or on which the hazard warning apparatus is situate. The hazard data received by the UWB device may be indicative of a maximum speed at which the hazard can be safely negotiated and this information may be passed, as the response, to the user (whether the user is a vehicle system or a driver). In one or more such embodiments, the response further comprises a speed-limiter signal for limiting the speed of the vehicle to no more than the maximum safe speed.

In one or more embodiments, the hazard warning apparatus may be configured to be to be integrated into a vehicle. In other embodiments, hazard warning apparatus may be independent of the vehicle and may be, for example, integrated into a mobile device such as a mobile phone of the driver of the vehicle.

In one or more embodiments, the UWB device is configured to comply with the IEEE 802.15.4 standard. The IEEE standard may provide a common protocol for both data transfer and ranging. Furthermore, by using a common standard protocol, interference with other UWB devices or other similar hazard warning apparatus may be reduced, or completely avoided.

According to a second aspect of the present disclosure, there is provided a hazard warning system, comprising a hazard warning apparatus as claimed in any preceding claim, and the remote UWB device.

In one or more embodiments the remote UWB device comprises a network transceiver. The remote UWB device may then be configured to receive hazard updates from the network. The network may be a proprietary network or may for instance be an open network such as the Internet. Making provision for the remote UWB device to access the Internet may, for example, allow for updates to the hazard warning data broadcast by the remote UWB device.

In one or more embodiments, the remote UWB device is portable, and configured to be placed proximate to a temporary hazard. Such embodiments may be particularly convenient in situations such as roadworks, or temporary damage to the road surface caused by for example landslips or spillages, for which the hazard is temporary. In other embodiments, the remote UWB device may be designed or configured to be a permanent fixture for example in the case of traffic control signals.

According to a third aspect of the present disclosure, there is provided: a method comprising: receiving a beacon signal from a remote UWB device; performing a ranging session with the remote UWB device; receiving hazard data from the remote UWB device; and in response to the UWB device identifying a hazard, provide a response to a user.

In one or more embodiments, the response is one of an audible signal, a visual signal, or an audiovisual signal. In one or more embodiments, the method further comprises, at an evaluation unit: determining whether a reaction is required to the hazard warning, and in response to determining that a reaction is not required, suppressing the response. The method may be integrated into a vehicle operating system.

In one or more embodiments, the user is an advanced driver assistance system, ADAS, and the response is a control signal for the advanced driver assistance system.

### BRIEF DESCRIPTION OF THE DRAWINGS

Reference will now be made to the accompanying drawings, which are not necessarily drawn to scale, and wherein:
FIG. 1 shows a hazard warning apparatus 100 according to one or more embodiments;
FIG. 2 shows a hazard warning system 200 according to one or more embodiments; and
FIG. 3 shows a hazard warning system 300 according to one or more embodiments.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION

The subject disclosure relates to hazard warning apparatus and systems for use in automotive applications.

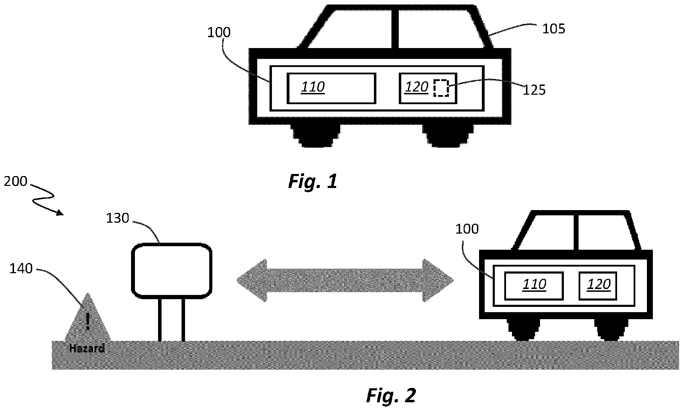

Figure 1 shows a hazard warning apparatus 100 according to one or more embodiments. The apparatus 100 is, in use, located in or on a vehicle 105. As will be described in more detail hereinbelow, the apparatus may be integral to the vehicle 105 or may be distinct therefrom, for example in embodiments in which the apparatus is at least partly implemented in a mobile device such as a mobile phone.

The apparatus comprises a UWB device 110. The UWB device may be described as a mobile UWB device. The UWB device 110 includes a transceiver capable of transmitting and receiving UWB signals. In some applications, the UWB signals are compliant with the IEEE standard 802.15.4. In particular, the UWB device is configured to receive a beacon signal from a remote UWB device, when the apparatus is within range, or sufficient close to, the remote UWB device to pick up the beacon signal. The UWB device may be configured as a so-called "UWB tag" and the remote UWB device may be configured as a "UWB anchor". The UWB device is configured to, in response to receiving the beacon signal from the remote UWB device, perform a ranging session with the UWB anchor. The skilled person will appreciate, that, as used herein, a UWB tag, may be an active device, and the term "tag" is to be construed broadly. In particular, as used herein, the term "tag" is not intended limit the functionality of the device. Rather, the term is intended to indicate that, in use, the device is associated with, or "tags" a vehicle, which can be stationary or moving. The tag may thereby be distinguished from the remote UWB device or anchor, which in use, is typically static, or immobile.

The skilled person will be familiar that a ranging session comprises a sequential exchange of signals, sent and received by each of the anchor and the mobile UWB device. UWB ranging is typically achieved by determining the total time of flight for a round-trip, for example from the mobile UWB device to the anchor and back. By determining the time of flight of the signals, the distance between the anchor and the mobile UWB device may be established. In general, so-called "one-way" ranging is performed in which the distance between the mobile UWB device and the anchor is determined by and known only to the mobile UWB device, although the disclosure is not limited thereto, and in some applications so-called "two-way" ranging is carried out such that the distance between the mobile UWB device and the anchor is established by and thus known to both the mobile UWB device and the anchor. Two-way ranging may be particularly beneficial for systems involving hazards in which traffic congestion may add to the hazard or risk. In such a situation, the anchor (which is typically the remote UWB device located at the hazard) may be provided with additional functionality so as to adjust or modify warning data it transmits, in dependence on the number of vehicles in the proximity, which it may estimate by tracking or monitoring ranging sessions with multiple mobile UWB devices.

In addition to performing the ranging session with the remote UWB device, the UWB device is further configured to receive data from the anchor. In particular the data is associated with the hazard. The hazard data may be indicative of the nature of the hazard or, without limitation, may be indicative of a response or reaction which is required, due to the presence of the hazard. For example, the data may be descriptive, such as to indicate whether the hazard relates to the road surface, to the environment (for example, fog), or is transient (for example in case the hazard is a warning of poor or inhibited visibility during certain times of day for example when the sun is low in the sky). In other examples, the data may be directive, such as providing an indication of a maximum allowed speed for vehicles in the vicinity of the hazard. For example in the case of an adverse camber the hazard data may be advise of a maximum legal speed limit, compliance with which is mandatory. The data may be a combination of descriptive and directive data. For example, for a location prone to flooding, the data may be a combination of descriptive data as to whether the road surface is actually flooded, and directive data indicating a maximum allowed speed limit in the presence of floodwater.

In addition to the UWB device, the hazard warning apparatus 100 further comprises a response unit 120 which responds to the receipt of the hazard data by the UWB device 110. In some embodiments, the response unit is configured to provide a response in the form of an audible or visual, or in general an audiovisual, indicator. For example the response unit may include, or enable, a display which visually displays the maximum speed limit in response to the UWB device receiving hazard data including a maximum speed limit. As another example, the display may show a warning or other pictorial image; for instance, it may show a "sharp bend" warning of an approaching hairpin bend, a zigzag warning of an approaching twisty roadway, or a "loose gravel" warning of a recently resurfaced section of road surface. Alternatively, or in addition to the visual display, the response unit may be configured to provide an audible warning, which may, without limitation, be in the form of an alarm sound, or a spoken command. The response unit may include a graphical user interface (GUI), voice user interface (VUI), or the like or may be configured to be cooperate with or instruct other systems within the vehicle such as an integrated display unit or a head-up display unit. In embodiments in which the hazard warning apparatus is not integral with the vehicle but is, for example, integrated into a mobile device such as a mobile phone, the response unit may include one or more transceivers, for known communication modes such as USB, WIFI or car-play, and the like.

In one or more other embodiments, the response unit provides a control signal for use by other vehicle systems. For example, in vehicles which include advanced driving assistance systems (ADAS), the response unit may provide a signal to the radar system. The signal may be a control signal or may be an information signal. For example, in the case that the hazard data includes a maximum legal speed limit, the signal may be provided to the vehicles ADAS to prevent the vehicle from exceeding the speed limit. In such an example, the UWB device may be further configured to periodically repeat the ranging session, until either the hazard warning apparatus or the ADAS determines that the vehicle is out of range of the hazard and the maximum speed limit no longer applies. The skilled person will readily appreciate that there are many other example applications in which the hazard warning apparatus repeats the ranging operation to determine changes in the distance between the hazard and the vehicle, over time.

Although the above embodiments have been described in relation to advanced driving assistance systems, hazard warning apparatus may be equally applicable for partially or fully autonomous driving systems. In such systems, and optionally in vehicles including a ADAS, the user to which the response unit sends the signal may be a system, rather than a person.

The hazard warning apparatus 100 may include an evaluation unit 125. As shown the evaluation unit may be comprised within the response unit 120, or may be separate therefrom. The evaluation unit is configured to determine whether a reaction is required to the hazard warning, and in response to determining that a reaction is not required, may suppress the response. For example, the evaluation unit may compare a speed of a vehicle on or in which the apparatus is located, with a maximum speed hazard data, and determine that the vehicle does not need to slow down, and thus suppress the response. In other embodiments, the evaluation units may be used to, for example, to calculate the hazard index for the roadway in the vicinity of the remote UWB device 130. The evaluation unit may receive information from other sources, in addition to the hazard data. For example it may receive sensor data as to present real-time conditions such as whether it is raining, or the visibility is reduced due to for example fog. The evaluation unit may further take into account the nature of the vehicle in or on which the hazard warning apparatus is located. For example it may consider whether the vehicle is a two wheeler (such as a motorbike) a four wheeler, (such as a family car), or a larger vehicle (such as a container truck). The evaluation units may then calculate a maximum allowable speed based both on the hazard data from the remote UWB device and the environmental and are vehicle specific data. For example the maximum allowable speed for a truck in fog may be different and in particular lower than the maximum allowable speed for a family car in bright sunshine. In one or more such embodiments, the evaluation units may modify, rather than suppress, the response.

Turning now to Fig. 2, this shows a hazard warning system 200, comprising a hazard warning apparatus 100 as described above, and a remote UWB device 130. As already mentioned, the remote UWB device may typically configured as a UWB anchor. The UWB device 130 is positioned located proximal to a hazard 140. The hazard may, as described above, be a temporary hazard or a permanent hazard. In the event that the hazard is a permanent hazard, the remote UWB device may be permanently affixed or attached to a structure close to, or forming part of the hazard itself. Alternatively, the hazard may be a temporary hazard, such as temporary roadworks in the roadway or a spillage on the roadway. In such applications, the remote UWB device 130 may be temporarily positioned located close to the hazard. For such applications, the remote UWB device 130 may be portable, and in particular it may include its own power supply.

As shown in Fig. 2, after establishing the presence of the mobile UWB device 110, by means of the transmission and receipt of a beacon signal, the remote UWB device or anchor 130 typically performs a handshake procedure with the mobile UWB device 110, prior to a ranging session, which may be initiated either by the mobile UWB device or by the anchor. The skilled person will appreciate that in other embodiments, the handshaking session may form an integral part of the ranging session.

The remote UWB device may further comprise a remote evaluation unit 135. The remote evaluation unit 135 may include functionality corresponding to that of the evaluation unit 125. Put another way, the decision-making with regards to for example a maximum allowable speed limit for a particular hazard warning apparatus 100, and thus for an associated vehicle in on which the hazard warning apparatus is located may be undertaken at the remote UWB device, rather than on the vehicle. To facilitate this, the skilled person will appreciate that in such embodiments two-way ranging will generally be required. Data transfer may further be required from the hazard warning apparatus to the remote UWB device in order that the latter may have sufficient vehicle specific or environmental specific data from which to evaluate for example a maximum allowable speed limit. In such embodiments, the hazard data transmitted from the remote UWB device to the hazard warning apparatus may include the results of an evaluation undertaken by the remote evaluation unit 135.

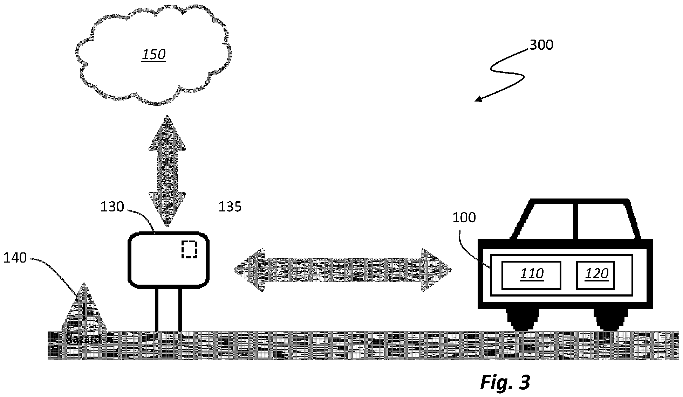

Fig. 3, shows a hazard warning system 300, comprising a hazard warning apparatus 100 as described above, and a remote UWB device 130. This system is similar to that shown in Fig. 2, except that in this example, the remote UWB device 130 is connected to a network (shown schematically at 150). The network 150 may be a proprietary network or may be an open network such as the Internet. By providing a connection between the remote UWB device 130 and the network, it may be possible to update the remote UWB device over the network, for example to receive hazard updates in the event that either the nature, magnitude or existence of the hazard changes. For example, in the event of a temporary hazard, a controller may provide an update to the remote UWB device 130 to indicate that the event causing the hazard has terminated (for example roadworks have been completed and there is no longer a workforce in the road which requires avoiding, or environmental conditions have changed such that a warning of fog is no longer required), or changed (for example in the event that the original hazard was a particularly hazardous or dangerous junction, updates may be provided through the network, either over the air or wired, to indicate that an accident had occurred, exacerbating the danger. In other embodiments, open access may be provided to the hazard information and hazard data, such that other road users may update the hazard data with real-time information.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement calculated or constructed to achieve the same or a similar purpose may be substituted for the specific embodiments shown. This disclosure is intended to cover any and all adaptations or variations of various embodiments. Combinations of the above embodiments, and other embodiments not specifically described herein, are contemplated by the subject disclosure.

For instance, one or more features or aspects from one or more embodiments can be combined with one or more features or aspects of one or more other embodiments. In one or more embodiments, features that are positively recited can also be negatively recited and excluded from the embodiment with or without replacement by another structural and/or functional feature.

Additionally, one or more devices or components described with respect to the exemplary embodiments can facilitate one or more functions, where the facilitating (e.g., facilitating access or facilitating establishing a connection) can include less than every step needed to perform the function or can include all of the steps needed to perform the function.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A hazard warning apparatus, for use in automotive applications and comprising:
an ultra-wideband, UWB, device configured to identify a hazard by:
receiving a beacon signal from a remote UWB device;
performing a ranging session with the remote UWB device; and
receiving hazard data from the remote UWB device; and
a response unit configured to, in response to the UWB device identifying a hazard, provide a response to a user.

2. The hazard warning apparatus of claim 1, wherein the response is one of an audible signal, a visual signal, or an audiovisual signal.

3. The hazard warning apparatus of claim 2, wherein the response unit further comprises an evaluation unit configured to determine whether a reaction is required to the hazard warning, and in response to determining that a reaction is not required, to suppress the response.

4. The hazard warning apparatus of claim 1 or 2, wherein the user is an advanced driver assistance system, ADAS, and the response is a control signal for the advanced driver assistance system.

5. The hazard warning apparatus of any preceding claim, wherein the response is indicative of a maximum safe speed for a vehicle in or on which the hazard warning apparatus is situate.

6. The hazard warning apparatus of any preceding claim, configured to be integrated into a vehicle.

7. The hazard withing apparatus of claim 6 when dependent on claim 5, wherein the response further comprises a speed-limiter signal for limiting the speed of the vehicle to no more than the maximum safe speed.

8. The hazard warning apparatus of any preceding claim, wherein the UWB device is configured to comply with the IEEE 802.15.4 standard.

9. The hazard warning apparatus of any preceding claim, wherein the UWB device is a UWB tag.

10. A hazard warning system, comprising a hazard warning apparatus as claimed in any preceding claim, and the remote UWB device.

11. The hazard warning system of claim 10, wherein the remote UWB device comprises an network transceiver.

12. The hazard warning system of claim 11, wherein the remote UWB device is configured to receive hazard updates from the network.

13. The hazard warning system of any of claim 10 to 12, wherein the remote UWB device is portable, and configured to be placed proximate to a temporary hazard.

14. The hazard warning system of any of claims 10 to 13, wherein the remote UWB device further comprises a remote evaluation unit.
